(19) Europäisches Patentamt / European Patent Office / Office européen des brevets

(11) **EP 4 201 913 A1**

(12) **EUROPEAN PATENT APPLICATION**

(43) Date of publication:
**28.06.2023 Bulletin 2023/26**

(21) Application number: **21383204.1**

(22) Date of filing: **23.12.2021**

(51) International Patent Classification (IPC):
***C04B 28/14*** (2006.01)    ***C04B 28/16*** (2006.01)
***C04B 111/10*** (2006.01)

(52) Cooperative Patent Classification (CPC):
(C-Sets available)
**C04B 28/145; C04B 14/46; C04B 28/14;
C04B 28/16;** C04B 2111/00612; C04B 2111/10

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SAINT-GOBAIN PLACO**
**92400 Courbevoie (FR)**

(72) Inventors:
• **NIETO BARTOLOME, Pablo**
**92400 Courbevoie (FR)**
• **DOMINGUEZ MARTINEZ, Alejandro**
**92400 Courbevoie (FR)**
• **PARDO COBO, Fernando**
**92400 Courbevoie (FR)**

(74) Representative: **Murgitroyd & Company
Murgitroyd House
165-169 Scotland Street
Glasgow G5 8PL (GB)**

(54) **A CEMENTITIOUS PRODUCT**

(57)     There is provided a cementitious product comprising cementitious material, the cementitious product further comprising stone wool objects, said stone wool objects comprising stone wool fibres, wherein a portion of the stone wool fibres have a longest dimension greater than 250μm. In this way, there is provided a cementitious product with improved fire performance.

FIG. 1

(52) Cooperative Patent Classification (CPC): (Cont.)

C-Sets
**C04B 14/46, C04B 20/008;**
**C04B 28/14, C04B 14/46, C04B 14/4618,**
**C04B 14/4625, C04B 14/4631, C04B 18/167,**
**C04B 20/0052, C04B 22/143;**
**C04B 28/145, C04B 14/46, C04B 14/4618,**
**C04B 14/4625, C04B 14/4631, C04B 18/167,**
**C04B 20/0052, C04B 22/143, C04B 40/0608;**
**C04B 28/16, C04B 14/46, C04B 14/4618,**
**C04B 14/4625, C04B 14/4631, C04B 18/167,**
**C04B 20/0052, C04B 22/143, C04B 40/0608**

**Description**

**FIELD OF THE INVENTION**

The present invention relates to a cementitious product, and more specifically a cementitious product comprising stone wool objects.

**BACKGROUND TO THE INVENTION**

Gypsum occurs naturally as a raw material in the form of calcium sulphate dihydrate ($CaSO_4$ $2(H_2O)$). Gypsum containing products, such as plasterboard, are prepared by forming a mixture of calcined or dehydrated gypsum, namely calcium sulphate hemihydrate ($CaSO_4$ $0.5(H_2O)$), with water, to form a settable slurry that is then cast into a pre-determined shape. The calcium sulphate hemihydrate reacts with the water and becomes re-hydrated to the dihydrate crystal, which is then cured or dried to the solid state. Alternatively, gypsum plasters can be prepared by mixing powders comprising calcium sulphate hemihydrate ($CaSO_4$ $0.5(H_2O)$) with water, and then applying the wet mixture to a surface and allowing it to dry, forming a matrix of calcium sulphate dihydrate ($CaSO_4$ $2(H_2O)$) in situ. Alternative cementitious products can also be used as building materials.

Due their versatility, desirable mechanical properties and the possibility of achieving a high level of finish, gypsum products are commonly found throughout inhabited buildings. As such, the fire performance of these products is of great significance and concern.

Gypsum products naturally have a good fire performance, due to the presence of significant quantities of water bound to the molecules of calcium sulphate therein. In a fire event, the gypsum within the product is dehydrated, with this loss of water slowing the temperature increase of the gypsum product and protecting adjacent areas from excessive temperatures. In addition to this effect, the properties of the gypsum product are often improved by incorporating further additives, such as hydrocalcite, that slow the temperature increase of the gypsum.

However, to ensure adequate fire resistance, it is essential that the gypsum product does not crack or split during a fire event. Additionally, low levels of shrinkage are desired. Where these criteria are not met, the gypsum product can spall away from an underlying surface, potentially exposing structural elements such as girders to the direct heat of a fire potentially resulting in structural failure. Similar factors are relevant for other cementitious products.

Again, many techniques have been used to improve the mechanical properties of cementitious products in a fire event. For example, the inclusion of vermiculite within gypsum products is known to improve the mechanical properties of the product during a fire event. However, such an approach is not without cost and environmental impact due to current methods of obtaining the vermiculite additive.

**SUMMARY OF THE INVENTION**

According to a first aspect of the invention, there is provided a cementitious product comprising cementitious material, the cementitious product further comprising stone wool objects, said stone wool objects comprising stone wool fibres, wherein a portion of the stone wool fibres have a longest dimension greater than 250μm.

Such cementitious products demonstrate an improved fire performance with lower shrinkage and cracking when exposed to high temperatures compared to the state of the art. Additionally, where applicable, the re-use of waste stone wool reduces the environmental impact and the need for any expense in disposing of such waste by-product. In addition, such cementitious products can be manufactured with a reduced cost and environmental impact due to the reduced requirement for vermiculite.

It is understood that fibres, crossed fibres and particles are all examples of objects. The object length is defined as the maximum ferret diameter. The object diameter is the minimum ferret diameter. Fibres are objects with a diameter smaller than 0.3 times the object length and a straightness coefficient (S) equal to or greater than 0.9. Crossed fibres are objects with a diameter smaller than 0.3 times the object length and a straightness coefficient (S) less than 0.9. Crossed fibres include clusters of fibres that cross over one another, as well as very curved fibres, in particular very curved fibres with a small diameter.

The straightness coefficient (S) is a measure of how straight an object is. To calculate the straightness coefficient, the maximum dimension of the object as observed is measured (the maximum Feret diameter) and this value divided by the value of the longest measured path along the object. As such, the straightness coefficient is calculated via:

$$S = \frac{F}{L}$$

where F is the maximum Feret diameter and L is the longest measured path along the object.

A particle is an object with a diameter equal to or greater than 0.3 times the object length.

Spherical particles are a subset of particles. A spherical particle is a particle with a circularity (C) equal to or greater than 0.9. Non spherical particles are also a subset of particles. A non-spherical particle is a particle with a circularity (C) less than 0.9.

The circularity is the degree to which the particle is similar to a circle, taking into consideration the smoothness of the perimeter. Circularity (C) is calculated using the formula:

$$C = \sqrt{\frac{4\pi A}{P^2}}$$

where P is the perimeter and A is the area of the particle as observed in 2D imaging such as via a microscope.

Preferably, the cementitious material comprises at least one of calcium sulphate hemihydrate and calcium sulphate dihydrate. More preferably, the cementitious product is a powder, and the cementitious material comprises calcium sulphate hemihydrate. Preferably, the cementitious product is a plaster or a plasterboard, and the cementitious material comprises calcium sulphate dihydrate. In preferred embodiments, the cementitious material comprises gypsum.

A stone wool object is an object wherein the total amount of $Na_2O$, $K_2O$, CaO, MgO and, BaO is greater than or equal to 18 wt.%.

Preferably, the stone wool objects comprise at least one of silicon dioxide and aluminium oxide. More preferably, the stone wool objects comprise silicon dioxide and aluminium oxide, wherein the stone wool objects comprise more silicon dioxide than aluminium oxide by weight.

Preferably, the stone wool particles comprise at least one of silicon dioxide and aluminium oxide. More preferably, the stone wool particles comprise silicon dioxide and aluminium oxide, wherein the stone wool particles comprise more silicon dioxide than aluminium oxide by weight. Preferably, the stone wool fibres comprise at least one of silicon dioxide and aluminium oxide. More preferably, the stone wool fibres comprise silicon dioxide and aluminium oxide, wherein the stone wool fibres comprise more silicon dioxide than aluminium oxide by weight. Preferably, the stone wool crossed fibres comprise at least one of silicon dioxide and aluminium oxide. More preferably, the stone wool crossed fibres comprise silicon dioxide and aluminium oxide, wherein the stone wool crossed fibres comprise more silicon dioxide than aluminium oxide by weight. Preferably, the stone wool particles, the stone wool crossed fibres and the stone wool fibres have substantially the same composition.

Preferably, the stone wool objects are present in an amount of at least 4 wt.% relative to the cementitious material. More preferably, the stone wool objects are present in an amount of at least 5 wt.% relative to the cementitious material. Still more preferably, the stone wool objects are present in an amount of at least 10 wt.% relative to the cementitious material.

Preferably, the stone wool particles are present in an amount of at least 4 wt.% relative to the cementitious material. More preferably, the stone wool particles are present in an amount of at least 5 wt.% relative to the cementitious material. Still more preferably, the stone wool particles are present in an amount of at least 10 wt.% relative to the cementitious material.

Preferably, the stone wool fibres are present in an amount of at least 4 wt.% relative to the cementitious material. More preferably, the stone wool fibres are present in an amount of at least 5 wt.% relative to the cementitious material. Preferably, the stone wool crossed fibres are present in an amount of at least 4 wt.% relative to the cementitious material.

Preferably, the cementitious product is free of vermiculite. Preferably, the cementitious product is free of hydromagnesite.

Preferably, at least 0.8% by number of the stone wool fibres have a longest dimension greater than 250$\mu$m. More preferably, at least 2% by number of the stone wool fibres have a longest dimension greater than 250$\mu$m. Still more preferably, at least 2.5% by number of the stone wool fibres have a longest dimension greater than 250$\mu$m.

Preferably, at least 2% by number of the stone wool fibres have a longest dimension greater than 200$\mu$m. More preferably, at least 4% by number of the stone wool fibres have a longest dimension greater than 200$\mu$m. Still more preferably, at least 5% by number of the stone wool fibres have a longest dimension greater than 200$\mu$m.

Preferably, at least 4% by number of the stone wool fibres have a longest dimension greater than 150$\mu$m. More preferably, at least 9% by number of the stone wool fibres have a longest dimension greater than 150$\mu$m. Still more preferably, at least 11% by number of the stone wool fibres have a longest dimension greater than 150$\mu$m.

Preferably, the stone wool objects comprise spherical particles in an amount from 10% to 85% by number. More preferably, at least 15% by number of the stone wool objects are spherical particles. Still more preferably, at least 20% by number of the stone wool objects are spherical particles. Yet more preferably, at least 60% by number of the stone wool objects are spherical particles.

Preferably, at least 45% by number of the stone wool particles are spherical particles. More preferably, at least 50% by number of the stone wool particles are spherical particles. Still more preferably, at least 70% by number of the stone wool particles are spherical particles.

Preferably, the stone wool objects comprise fibres in an amount from 4% to 40% by number. More preferably, at least 5% by number of the stone wool objects are fibres. Still more preferably, at least 20% by number of the stone wool objects are fibres. Yet more preferably, at least 30% by number of the stone wool objects are fibres.

Preferably, the stone wool objects comprise crossed fibres in an amount from 3% to 20% by number. More preferably, at least 5% by number of the stone wool objects are crossed fibres. Still more preferably, at least 15% by number of the stone wool objects are crossed fibres.

Preferably, the stone wool objects comprise non-spherical particles in an amount from 5% to 20% by number. More preferably, at least 6% by number of said stone wool objects are non-spherical particles. Still more preferably, at least 15% by number of said stone wool objects are non-spherical particles.

Preferably, particles (comprising spherical and non-spherical particles) comprise from 40% to 90% by number of the waste stone wool objects.

Preferably, in total, fibres and crossed fibres comprise from 10% to 60% by number of the waste stone wool objects.

Preferably, at least 7% by number of the stone wool particles are non-spherical particles. More preferably, at least 27% by number of the stone wool particles are non-spherical particles. Still more preferably, at least 34% by number of the stone wool particles are non-spherical particles.

Preferably, the stone wool fibres have a mean fibre diameter of 6 $\mu$m or greater. More preferably, the stone wool fibres have a mean fibre diameter of 7 $\mu$m or greater. Still more preferably, the stone wool fibres have a mean fibre diameter of 8 $\mu$m or greater.

Preferably, the cementitious product comprises a water gauge of between 55 wt.% and 78 wt.% of the total composition.

Preferably, the density of the cementitious product is at least 525 kg/m$^3$ or greater. More preferably, the density of the cementitious product is at least 730 kg/m$^3$ or greater.

Preferably, the coverage of the cementitious product is at least 4.5 kg/m$^2$.cm or greater. More preferably, the coverage of the cementitious product is at least 6 kg/m$^2$.cm or greater.

Preferably, the flexion of the cementitious product is at least 1 mm of greater. Preferably, the final hardness of the cementitious product is at least 950 m/s or greater.

Preferably, the waste stone wool comprises binder in an amount of 0 to 6% by weight of the dry binder to the waste stone wool material weight. More preferably, the waste stone wool comprises binder in an amount of 1 to 6% by weight of the dry binder to the waste stone wool material weight. Still more preferably, the waste stone wool comprises binder in an amount of 2 to 5% by weight of the dry binder to the waste stone wool material weight. Preferably, the binder is organic.

## DETAILED DESCRIPTION

Embodiments of the present invention will now be described by way of example only and with reference to the accompanying figures, in which:

   Figures 1, 2 and 3 depict temperature-time graphs for products both according to and not according to the present invention;

   Figures 4A-4D depict wide flange H beams encased in products both according to and not according to the present invention after undergoing fire event testing;

   Figure 5A-5D depict first examples of standard universal I beams encased in products both according to and not according to the present invention after undergoing fire event testing; and

   Figure 6A-6D depict further examples of standard universal I beams encased in products both according to and not according to the present invention after undergoing fire event testing.

## STONE WOOL

In the experiments described herein, the stone wool used was obtained as a residue of cutting stone wool products the products being typically produced from fibres obtained from molten rock by high speed spinning on centrifuging wheels, and glued together by a small quantity of binding agent.

The cutting residue, hereinafter waste, may be generated at products manufacturing or during a subsequent step of transforming the products to shape and size. However, other sources of stone wool, and more specifically waste stone wool are envisaged.

After its initial generation, the stone wool used in the experiments herein was not milled, ground or crushed before use. In other words, the waste stone wool used herein is the unmodified waste product of the processes described below. As such, the particle size of the stone wool was not reduced before its incorporation into the cementitious products described later. Examples of the stone wool products are detailed below in Table 1.

**TABLE 1**

|  | Mean Diameter ($\mu$m) | Standard Deviation ($\mu$m) | Fibres Longer than 250 $\mu$m (% of fibres by number) | Fibres Longer than 200 $\mu$m (% of fibres by number) | Fibres Longer than 150 $\mu$m (% of fibres by number) |
|---|---|---|---|---|---|
| Stone Wool Example 1 | 8.86 | 3.20 | 0.8 | 2.1 | 4.4 |
| Stone Wool Example 2 | 7.16 | 3.09 | 2.2 | 4.7 | 9.3 |
| Stone Wool Example 3 | 6.99 | 3.22 | 2.6 | 5.1 | 11.1 |

The stone wool objects used herein originate from a stone wool sandwich panel production process. This production process comprises cutting stages, such as the cutting of lamella with a cutting disk, which generate the waste stone wool objects.

The waste stone wool of Stone Wool Example 1 was obtained as the by-product of a cutting process, more specifically the waste product from a lamella cut with a cutting disk. The waste stone wool of Stone Wool Example 2 was obtained as the by-product of a milling process, more specifically the waste product from milling surface edges of a stone wool product. The waste stone wool of Stone Wool Example 3 was a mixture of the by-product of a cutting process, more specifically the waste product from a lamella cut with a cutting disk and the by-product of a milling process, more specifically the waste product from milling surface edges of a stone wool product.

Further, the morphology of the stone wool objects within each Stone Wool Example are detailed in Table 2.

TABLE 2

| Object Morphology | Stone Wool Example 1 (% of objects by number) | Stone Wool Example 2 (% of objects by number) | Stone Wool Example 3 (% of objects by number) |
|---|---|---|---|
| Fibres | 6 | 34 | 26 |
| Crossed fibres | 5 | 16 | 15 |
| Spherical particles | 82 | 33 | 43 |
| Non-spherical particles | 7 | 17 | 16 |

To study the object morphology, the objects were dispersed under compressed air on the glass support for analysis using a microscope at ×5 and ×20 magnifications. The dimensions of objects over an area of 24.5 mm by 24.5 mm were analysed.

Fibres larger than 5 $\mu$m in diameter were measured using ×5 magnification images and finer fibres were measured using ×20 magnification images, with a minimum detection diameter of 0.5 $\mu$m.

Crossed fibres larger than 5 $\mu$m in diameter were measured using x5 magnification images and finer crossed fibres were measured using x20 magnification images, with a minimum detection diameter of 0.5 $\mu$m.

**CEMENTITIOUS COMPOSITIONS**

To allow the efficacy of the claimed invention to be investigated, cementitious compositions were prepared using conventional techniques. Whilst the cementitious compositions presented herein comprise calcium sulphate as the major component, alternative cementitious compositions such as hydraulic cements are also considered to be within the scope of the invention.

Table 3, included below, details the composition of Examples 1 and 2 and Comparative Examples 1 and 2 as used in the experiments present herein. The stone wool used in Example 1 and Example 2 was Stone Wool Example 3.

**TABLE 3**

| | CEMENTITIOUS COMPOSITION (wt.% of the dry product) | | | |
|---|---|---|---|---|
| | Comparative Example 1 | Example 1 | Comparative Example 2 | Example 2 |
| **Hydromagnesite** | 0.0 | 0.0 | 4.0 | 0.0 |
| **Vermiculite** | 4.0 | 0.0 | 0.0 | 0.0 |
| **Stone Wool** | 0.0 | 4.0 | 0.0 | 20.0 |
| **Calcium Sulphate Hemihydrate** | 79.5 | 79.5 | 79.5 | 66.0 |
| **Calcium Sulphate Anhydrite** | 11.1 | 11.1 | 11.1 | 9.2 |
| **Other Minor Components** | 5.4 | 5.4 | 5.4 | 4.8 |

Herein, the other minor components may include perlite, lime, tartaric acid, heat resistance accelerators, resins, cellulose ether, entrained air and/or starch ethers.

**SLURRY PROPERTIES**

The properties of slurries capable of forming dry products with the composition of Examples 1 and 2 were compared with slurries capable of forming dry products with the composition of Comparative Examples 1 and 2. In each case, slurries were created with a water gauge of between 55 wt.% and 78 wt.% of the total composition, and the properties of these slurries measured and compared. The water gauge used in the slurries is dependent on the additives of the composition, with the water gauge adjusted such that the provided cementitious composition has a desirable texture and consistency. Instead of testing samples with the same water gauge, samples of similar consistency are consequently tested. The water gauge of each composition is outlined in Table 4.

Firstly, the density of each slurry was determined. To determine the density of each slurry, a vessel of known volume was filed with slurry and all air voids and bubbles removed with the introduction of a screwing knife in the slurry using a kneading motion. The mass of the slurry within the vessel was then measured, and the density of the slurry calculated. Each measurement was repeated three times to ensure accuracy.

Secondly, the coverage of each slurry was measured using the following technique. Using the density of the slurry, the following equation can be employed to calculate the coverage:

$$Coverage = (slurry\ density \times 10) \div (1 + water\ gauge).$$

Finally, the setting evolution of each slurry was determined using an Ultrasonic instrument. The Ultrasonic instrument measures the speed of ultrasonic vibrations through a cementious product during setting of the product.

To evaluate the setting evolution, the water was added to the slurry and the slurry was mixed thoroughly. The slurry was then placed between ultrasonic transducers during setting. The Ultrasonic instrument measured the speed of the ultrasonic vibrations until their speed became constant. When the ultrasonic speed became constant, the slurry was considered set. This process was repeated three times to ensure accuracy.

The results of the above experiments are included in Table 4.

**TABLE 4**

| | Density | Coverage | Setting Evolution | Water Gauge |
|---|---|---|---|---|
| | (kg/m$^3$) | (kg/m$^2$.cm) | | (wt.% of total composition) |
| **Comparative Example 1** | 775.7 | 6.5 | Progressive Setting | 55 |
| **Example 1** | 732.5 | 6.1 | Same setting evolution as Comparative Example 1 | 57 |

(continued)

| | Density | Coverage | Setting Evolution | Water Gauge |
|---|---|---|---|---|
| | (kg/m$^3$) | (kg/m$^2$.cm) | | (wt.% of total composition) |
| Comparative Example 2 | 745.6 | 6.4 | Snap Set | 59 |
| Example 2 | 526.8 | 4.5 | Same setting evolution as Comparative Example 2 | 78 |

As can be seen, the slurries have a similar performance and each one performs adequately.

**MECHANICAL PROPERTIES**

The mechanical properties of cementitious products with the composition of Examples 1 and 2 were compared with cementitious products with the composition of Comparative Examples 1 and 2. In each case, slurries were created with a water gauge detailed in Table 4 and allowed to set, with the mechanical properties of the set cementitious compositions measured and compared. To dry the slurries, each slurry was poured into a mould of dimension 16 cm by 4 cm by 4 cm. Once the plaster was set, the samples were taken from the mould and placed in a heater at 40°C for one day before being removed from the heater and left for five days at room temperature. The plaster samples were consequently dried and were suitable for testing as outlined herein.

Firstly, the hardness of the set cementitious composition was measured. The hardness of each set gypsum composition was measured by using an Ultrasonic instrument.

Secondly, samples of each composition underwent flexion testing. During flexion testing, each sample was supported at either end of its base by two support bars. A load cell with a maximum load of 10kN was used to apply a gradually increasing point loading force equidistant the support points on the top of the sample. In each case, the test concluded when the sample reached mechanical failure. At the point of mechanical failure, the relative displacement of the load point during the test was recorded. In each case, to ensure accuracy, the experiment was repeated for two samples.

Finally, the adhesion of set cementitious products according to each composition was evaluated by eye. The adhesion of the set cementitious products to both steel and concrete was evaluated these experiments again repeated twice for accuracy, in turn, was assessed by eye to determine if the adhesion was satisfactory.

The results of these mechanical experiments are presented in Table 5.

**TABLE 5**

| | Final Hardness | Flexion | Adhesion to Steel | Adhesion to Concrete |
|---|---|---|---|---|
| | (m/s) | mm | Visual | Visual |
| Comparative Example 1 | 1100 | 0.8 | Good | Good |
| Example 1 | 950 | 1.1 | Good | Good |
| Comparative Example 2 | 950 | 0.5 | Good | Good |
| Example 2 | 1100 | 1.2 | Good | Good |

As can be seen above, adhesion was good in all cases. Additionally, Example 1 and 2 showed better flexion results than Comparative Examples 1 and 2. Example 1 possesses 38% greater flexion compared to Comparative Example 1 and a 120% improvement compared to Comparative Example 2. Further, Example 2 possesses 50% greater flexion compared to Comparative Example 1 and a 140% improvement over Comparative Example 2.

The flexion and adhesion of each composition are detailed in Table 5. It can be seen that Example 1 and Example 2 possesses greater flexion than Comparative Example 1 and Comparative Example 2, demonstrating the improved mechanical properties of the composition of the present invention.

**FIRE TESTS**

As outlined above, to demonstrate good fire performance, the samples must show both good insulation performance and good resistance to cracking and shrinkage in a fire. Cementitious compositions can suffer from cracking and breaking when subjected to fire and high temperatures. The experiments below evaluate this.

**INSULATION PERFORMANCE**

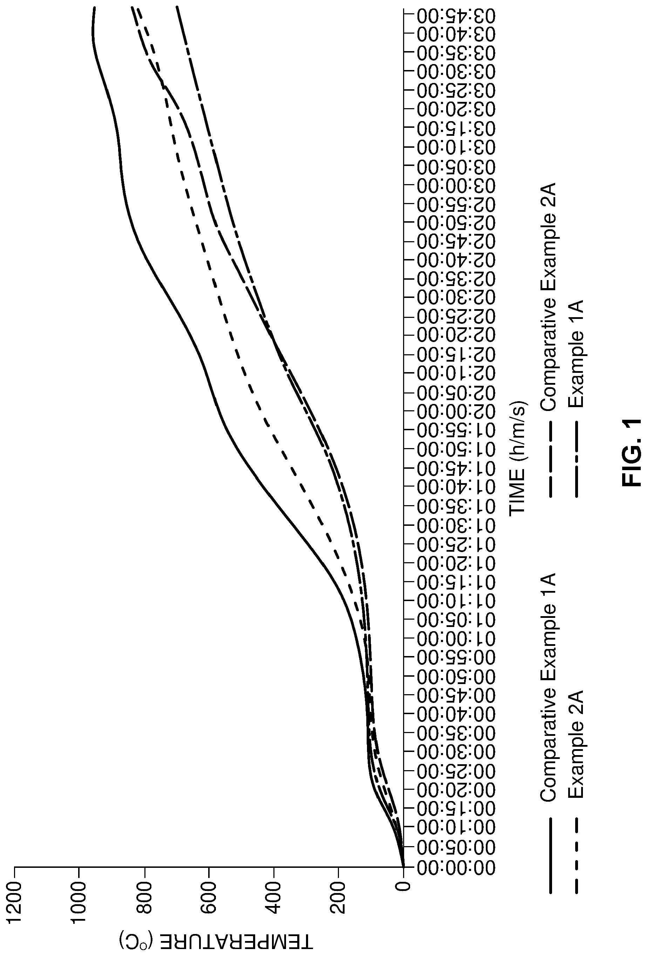

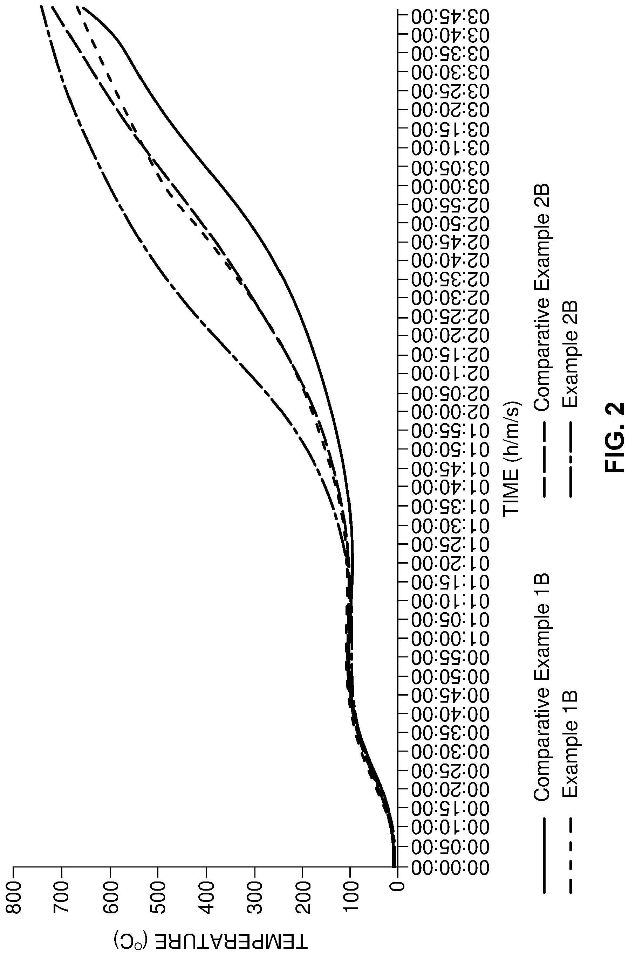

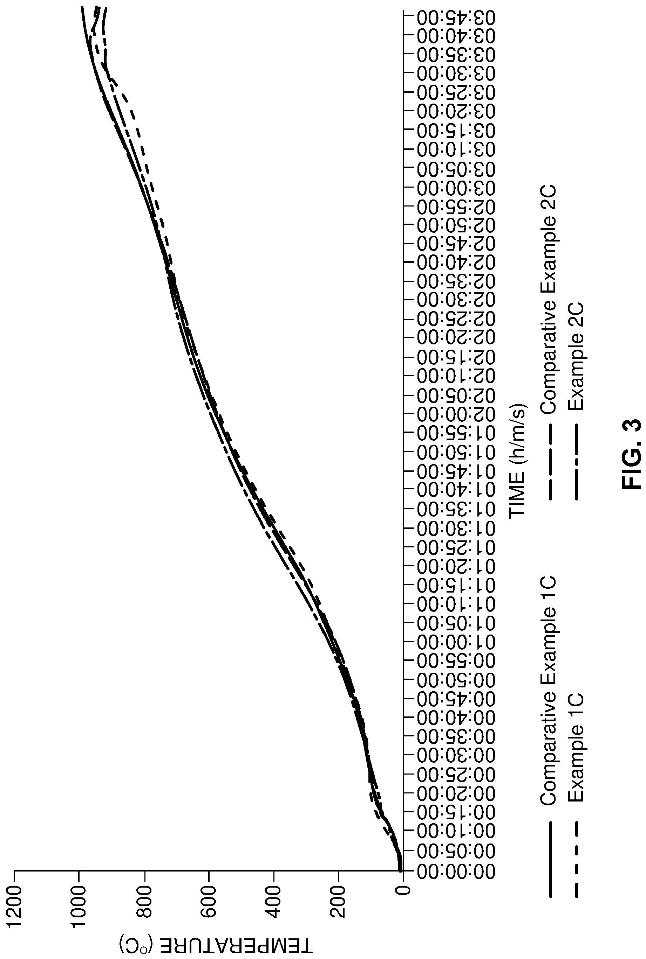

Insulation tests were carried out on three sample sizes made from the compositions of each of Example 1-2 and Comparative Examples 1-2. Comparative Examples 1A and 2A and Examples 1A and 2A in Figure 1 are made with the compositions of Comparative Example 1 and 2 and Example 1 and 2 respectively, and are of dimension 30mm HEA200, a known dimension for European standard wide flange H beams. Comparative Examples 1B and 2B and Examples 1B and 2B in in Figure 2 are made with the compositions of Comparative Example 1 and 2 and Example 1 and 2 respectively, and are of dimension 30mm IPE160, a known dimension for European standard universal I beams. Comparative Examples 1C and 2C and Examples 1C and 2C in of Figure 3 are made with the compositions of Comparative Example 1 and 2 and Example 1 and 2 respectively, and are of dimension 20mm IPE160, a known dimension for European standard universal I beams.

Each sample was tested for performance during a fire event by subjecting each sample to 1000°C in the oven for four hours. The samples were subjected to heating following the ISO834 heating curve.

The insulation performance of each sample is shown in Figures 1-3.

**CRACKING RESISTANCE**

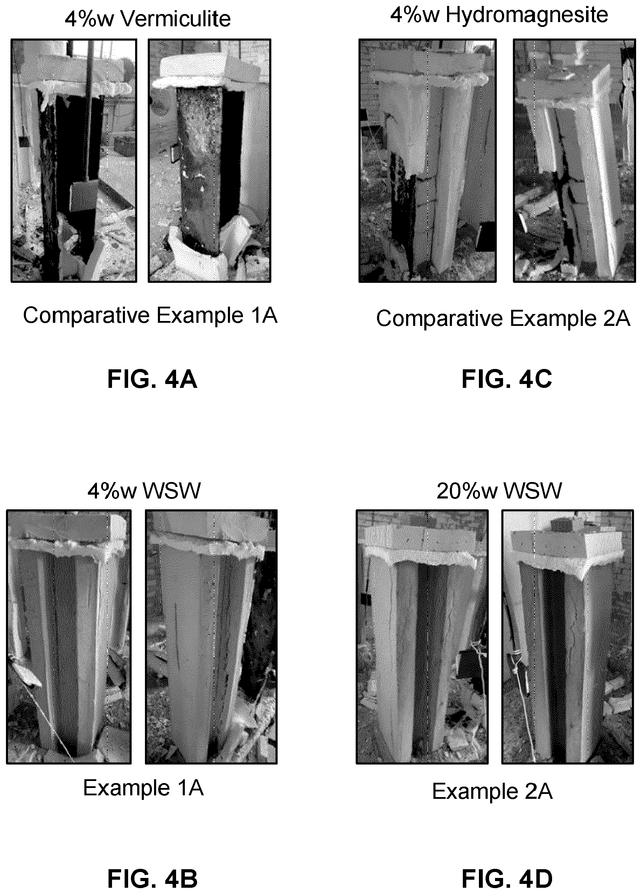

The cracking and shrinkage of each sample was assessed visually. As can be shown from Figures 4-6, Comparative Examples 1A-1C and Comparative Examples 2A-2C show significant cracking, shrinkage and visual fire damage, unlike Examples 1A-1C and Examples 2A-2C. In this way, Examples 1A-1C and Examples 2A-2C show improved cracking resistance over Comparative Examples 1A-1C and Comparative Examples 2A-2C.

The samples in Figures 4A-4D correspond to the samples of Figure 1. The minimum time taken to reach threshold temperatures of 500°C and 650°C are outlined in Table 6.

**TABLE 6**

| Composition | Minimum time taken (s) | |
|---|---|---|
| | 500°C | 650°C |
| **Comparative Example 1A** | 109 | 139 |
| **Example 1A** | 163 | 210 |
| **Comparative Example 2A** | 155 | 188 |
| **Example 2A** | 133 | 173 |

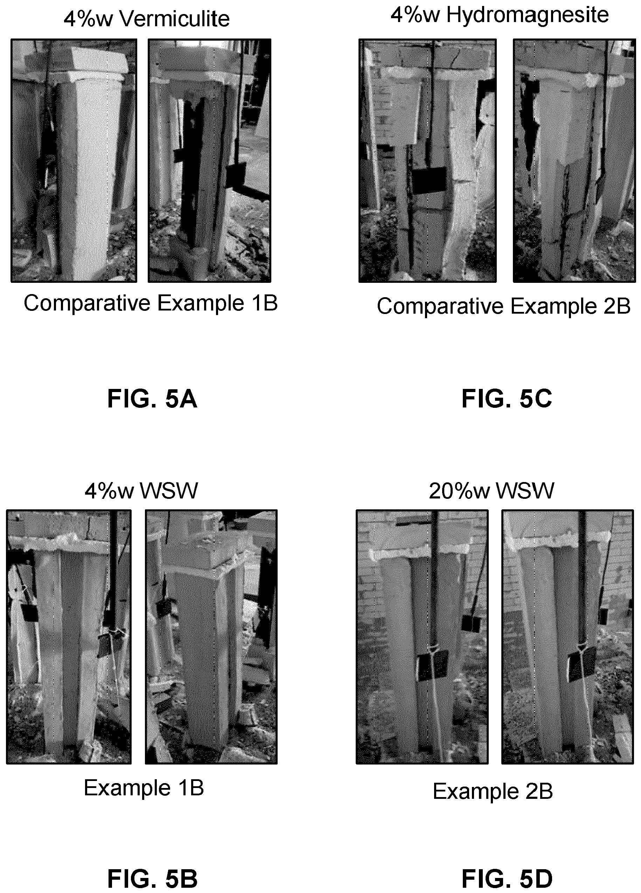

The samples in Figures 5A-5D correspond to the samples of Figure 2. The minimum time taken to reach threshold temperatures of 500°C and 650°C are outlined in Table 7.

**TABLE 7**

| Composition | Minimum time taken (s) | |
|---|---|---|
| | 500°C | 650°C |
| **Comparative Example 1B** | 201 | 226 |
| **Example 1B** | 183 | 221 |
| **Comparative Example 2B** | 185 | 213 |
| **Example 2B** | 159 | 193 |

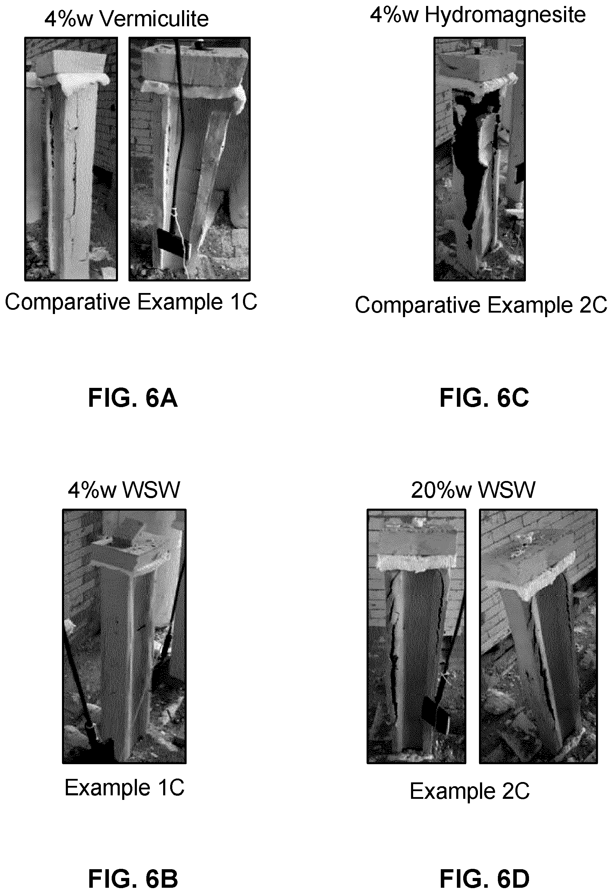

The samples in Figures 6A-6D correspond to the samples of Figure 3. The minimum time taken to reach threshold temperatures of 500°C and 650°C are outlined in Table 8.

**TABLE 8**

| Composition | Minimum time taken (s) | |
|---|---|---|
| | 500°C | 650°C |
| **Comparative Example 1C** | 104 | 134 |
| **Example 1C** | 107 | 138 |
| **Comparative Example 2C** | 104 | 138 |
| **Example 2C** | 102 | 132 |

As shown in Tables 6-8, Examples 1A-1C and Examples 2A-2C perform adequately during insulation testing. While, in some cases, Comparative Examples 1A-1C and Comparative Examples 2A-2C take longer to reach the determined threshold temperatures, indicating improved insulation performance, the insulation performance of Examples 1A-1C and Examples 2A-2C is still within an acceptable range.

Further, the overall fire testing performance of Examples 1A-1C and Examples 2A-2C is far superior to the performance of Comparative Examples 1A-1C and Comparative Examples 2A-2C as shown in Figures 4-6. Examples 1A-1C and Examples 2A-2C show significantly less cracking and loss of plaster than Comparative Examples 1A-1C and Comparative Examples 2A-2C, in addition to acceptable insulation performance.

Overall, the fire performance of Examples 1A-1C and Examples 2A-2C is significantly improved compared to Comparative Examples 1A-1C and Comparative Examples 2A-2C, due to the significant improvement in the mechanical performance of the Examples and concomitant reduction in direct heating of the encased beams.

**Claims**

1. A cementitious product, said cementitious product comprising cementitious material, said cementitious product further comprising stone wool objects, said stone wool objects comprising stone wool fibres, wherein a portion of said stone wool fibres have a longest dimension greater than 250$\mu$m.

2. The cementitious product of claim 1, wherein said cementitious material comprises at least one of calcium sulphate hemihydrate and calcium sulphate dihydrate.

3. The cementitious product of claim 2, wherein said cementitious product is a powder, and said cementitious material comprises calcium sulphate hemihydrate.

4. The cementitious product of claim 2, wherein said cementitious product is a plaster or a plasterboard, and said cementitious material comprises calcium sulphate dihydrate.

5. The cementitious product of any one preceding claim, wherein said stone wool objects comprise at least one of silicon dioxide, aluminium oxide and magnesium oxide.

6. The cementitious product of claim 5, wherein said stone wool objects comprise silicon dioxide and aluminium oxide, wherein said stone wool objects comprise more silicon dioxide than aluminium oxide by weight.

7. The cementitious product of any one preceding claim, wherein said stone wool objects are present in an amount of at least 4 wt.%, preferably 5 wt.% relative to the cementitious material.

8. The cementitious product of any one preceding claim, wherein said stone wool objects are present in an amount of at least 10 wt.% relative to the cementitious material.

9. The cementitious product of any one preceding claim, wherein said cementitious product is free of vermiculite.

10. The cementitious product of any one preceding claim, wherein at least 0.8% by number of said stone wool fibres have a longest dimension greater than 250$\mu$m, preferably wherein at least 2% by number of said stone wool fibres have a longest dimension greater than 250$\mu$m.

11. The cementitious product of any one preceding claim, wherein at least 30% by number of said stone wool objects are spherical particles, preferably wherein at least 40% by number of said stone wool objects are spherical particles.

12. The cementitious product of any one preceding claim, wherein at least 5% by number of said stone wool objects are fibres, preferably wherein at least 20% by number of said stone wool objects are fibres.

13. The cementitious product of any one preceding claim, wherein at least 5% by number of said stone wool objects are crossed fibres, preferably wherein at least 15% by number of said stone wool objects are crossed fibres.

14. The cementitious product of any one preceding claim, wherein at least 5% by number of said stone wool objects are non-spherical particles, preferably wherein at least 15% by number of said stone wool objects are non-spherical particles.

15. The cementitious product of any one preceding claim, wherein the stone wool fibres have a mean fibre diameter of 6 $\mu$m or greater, preferably wherein the stone wool fibres have a mean fibre diameter of 7 $\mu$m or greater.

**FIG. 1**

Comparative Example 1A — Comparative Example 2A

Example 2A — Example 1A

TIME (h/m/s)

**FIG. 2**

EP 4 201 913 A1

FIG. 3

EP 4 201 913 A1

4%w Vermiculite

Comparative Example 1A

**FIG. 4A**

4%w Hydromagnesite

Comparative Example 2A

**FIG. 4C**

4%w WSW

Example 1A

**FIG. 4B**

20%w WSW

Example 2A

**FIG. 4D**

15

4%w Vermiculite

Comparative Example 1B

**FIG. 5A**

4%w WSW

Example 1B

**FIG. 5B**

4%w Hydromagnesite

Comparative Example 2B

**FIG. 5C**

20%w WSW

Example 2B

**FIG. 5D**

4%w Vermiculite

Comparative Example 1C

**FIG. 6A**

4%w Hydromagnesite

Comparative Example 2C

**FIG. 6C**

4%w WSW

Example 1C

**FIG. 6B**

20%w WSW

Example 2C

**FIG. 6D**

Europäisches
Patentamt

European
Patent Office

Office européen
des brevets

# EUROPEAN SEARCH REPORT

Application Number

EP 21 38 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 187 474 A1 (KNAUF INSULATION SPRL [BE]) 5 July 2017 (2017-07-05) | 1,2, 4-10,12, 15 | INV. C04B28/14 C04B28/16 |
| A | * paragraphs [0005], [0024] * <br> * claims 1-9 * | 3,11,13, 14 | ADD. C04B111/10 |
| X | JP H01 192743 A (NIPPON STEEL CHEMICAL CO) 2 August 1989 (1989-08-02) <br> * the whole document * | 1 | |
| X | DVORKIN, L. I.: "Wall blocks from wastes from mineral wool manufacture and basalt processing", CHEMICAL ABSTRACTS, vol. 114, no. 7, 233829Q, 17 June 1991 (1991-06-17), page 318, XP000186834, ISSN: 0009-2258 <br> * abstract * <br> & DVORKIN L I ET AL: STROITEL'NYE MATERIALY I KONSTRUKCII, IZDATEL'STVO UKRARKHSTROYINFORM, RU, no. 3, 1 January 1990 (1990-01-01), pages 14-15, XP009536445, ISSN: 0007-2974 <br> * the whole document * | 1 | |
| A | ES 2 561 730 A1 (UNIV MADRID POLITECNICA [ES]) 29 February 2016 (2016-02-29) <br> * page 6, line 18 – line 32 * <br> * claims 1,3-5 * | 1-15 | TECHNICAL FIELDS SEARCHED (IPC) <br> C04B |
| A | US 2005/066859 A1 (LEE SANG-HOON [KR] ET AL) 31 March 2005 (2005-03-31) <br> * claims 1-6 * | 1 | |

-/--

The present search report has been drawn up for all claims

| Place of search | Date of completion of the search | Examiner |
|---|---|---|
| The Hague | 13 June 2022 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

Application Number

EP 21 38 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROMANIEGA PIÑEIRO SONIA ET AL: "New Plaster Composite with Mineral Wool Fibres from CDW Recycling", ADVANCES IN MATERIALS SCIENCE AND ENGINEERING, [Online] vol. 2015, 1 January 2015 (2015-01-01), pages 1-9, XP055929352, US ISSN: 1687-8434, DOI: 10.1155/2015/854192 Retrieved from the Internet: URL:https://downloads.hindawi.com/journals /amse/2015/854192.pdf> * figure 3 * ----- | 1 | |
| A | DE 10 2015 120721 A1 (GRÖPER JÖRG [DE]; K-UTEC AG SALT TECH [DE]) 1 June 2017 (2017-06-01) * paragraphs [0003], [0008], [0009] * * examples 1,2 * * claims 1-17 * ----- | 1 | |
| A | CN 112 250 409 A (CHONGQING CONSTRUCTION SCIENCE RES INSTITUTE CO LTD ET AL.) 22 January 2021 (2021-01-22) * claims 1,3,4 * ----- | 1 | TECHNICAL FIELDS SEARCHED (IPC) |
| A | EP 2 045 227 A1 (INTUMEX GMBH [AT]) 8 April 2009 (2009-04-08) * paragraph [0061]; example 4 * ----- | 1 | |
| A | US 10 696 594 B2 (USG INTERIORS LLC [US]) 30 June 2020 (2020-06-30) * claims 1,6,14,15 * ----- | 1 | |
| A | US 2009/173464 A1 (BAIG MIRZA A [US]) 9 July 2009 (2009-07-09) * paragraph [0054]; examples 1-4; table 1 * ----- -/-- | 1 | |

The present search report has been drawn up for all claims

| Place of search | Date of completion of the search | Examiner |
|---|---|---|
| The Hague | 13 June 2022 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 21 38 3204**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DD 231 340 A1 (BAUKOMBINAT KOEPENICK VEB [DD]) 24 December 1985 (1985-12-24) * the whole document * ----- | 1 | |

TECHNICAL FIELDS SEARCHED (IPC)

The present search report has been drawn up for all claims

| Place of search | Date of completion of the search | Examiner |
|---|---|---|
| The Hague | 13 June 2022 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 21 38 3204

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2022

| Patent document cited in search report | | Publication date | Patent family member(s) | | Publication date |
|---|---|---|---|---|---|
| EP 3187474 | A1 | 05-07-2017 | NONE | | |
| JP H01192743 | A | 02-08-1989 | NONE | | |
| ES 2561730 | A1 | 29-02-2016 | NONE | | |
| US 2005066859 | A1 | 31-03-2005 | KR 20050031196 | A | 06-04-2005 |
| | | | US 2005066859 | A1 | 31-03-2005 |
| DE 102015120721 | A1 | 01-06-2017 | NONE | | |
| CN 112250409 | A | 22-01-2021 | NONE | | |
| EP 2045227 | A1 | 08-04-2009 | EP 2045227 | A1 | 08-04-2009 |
| | | | PL 2045227 | T3 | 30-04-2015 |
| US 10696594 | B2 | 30-06-2020 | AU 2018316196 | A1 | 12-03-2020 |
| | | | CA 3072218 | A1 | 14-02-2019 |
| | | | CN 111094209 | A | 01-05-2020 |
| | | | EP 3665134 | A1 | 17-06-2020 |
| | | | JP 2020530588 | A | 22-10-2020 |
| | | | KR 20200040778 | A | 20-04-2020 |
| | | | US 2019047914 | A1 | 14-02-2019 |
| | | | WO 2019032774 | A1 | 14-02-2019 |
| | | | ZA 202001290 | B | 26-05-2021 |
| US 2009173464 | A1 | 09-07-2009 | BR PI0819574 | A2 | 05-05-2015 |
| | | | CA 2709690 | A1 | 16-07-2009 |
| | | | CN 101918651 | A | 15-12-2010 |
| | | | CO 6280557 | A2 | 20-05-2011 |
| | | | EP 2240648 | A1 | 20-10-2010 |
| | | | JP 2011508839 | A | 17-03-2011 |
| | | | KR 20100106569 | A | 01-10-2010 |
| | | | RU 2010125987 | A | 10-02-2012 |
| | | | TW 200933004 | A | 01-08-2009 |
| | | | US 2009173464 | A1 | 09-07-2009 |
| | | | WO 2009088797 | A1 | 16-07-2009 |
| DD 231340 | A1 | 24-12-1985 | NONE | | |

EPO FORM P0459

For more details about this annex : see Official Journal of the European Patent Office, No. 12/82